# EUROPÄISCHE PATENTSCHRIFT

(11) **EP 4 729 145 B1**
(45) Veröffentlichungstag und Bekanntmachung des Hinweises auf die Patenterteilung: **14.10.2026**
(21) Anmeldenummer: 24206624.9
(22) Anmeldetag: 15.10.2024
(51) Int. Cl.: B01D 21/00

(54) **LAMELLENMODUL EINES SCHRÄGKLÄRERS**
LAMELLA MODULE OF A SUSPENDED CLARIFIER
MODULE À LAMELLES D'UN CLARIFICATEUR INCLINÉ

(43) Veröffentlichungstag der Anmeldung: 22.04.2026
(73) Patentinhaber: Schneider, Valeri, 6300 Zug (CH); Sutyaginskiy, Daniel, 53721 Siegburg (DE)
(72) Erfinder: Schneider, Valeri, 6300 Zug (CH); Sutyaginskiy, Daniel, 53721 Siegburg (DE)
(74) Vertreter: KBN IP Patentanwälte Partnerschaft mbB

(56) Entgegenhaltungen:
- US-A- 3 963 624
- US-A- 4 028 256
- US-A1- 2004 031 750
- US-A1- 2008 314 823
- US-A1- 2014 083 921
- US-A1- 2022 033 277
- US-B2- 10 870 072

## Beschreibung

Die Erfindung betrifft ein Lamellenmodul eines Schrägklärers mit einer Mehrzahl von parallel zueinander angeordneten und im Einbauzustand schräg zur Horizontalen gehalterten Lamellenplatten.

Schrägklärer, auch Lamellenabscheider genannt, sind Sedimentationsanlagen, die in Absetzbecken einer Wasserreinigungsanlage zur Behandlung des durchströmenden Wassers durch Absetzen eingesetzt werden. Sie umfassen häufig parallel zueinander ausgerichtete Lamellenplatten, die durchströmt werden. Die Wirkung besteht darin, dass die Sedimente aus dem Wasser nur die geringe Distanz zwischen den Lamellenplatten von einigen Zentimetern durchsinken müssen statt der gesamten Beckentiefe in dem Absetzbecken. Daraus ergibt sich eine deutlich bessere Abscheidewirkung. Die Lamellenplatten sind im Einbauzustand schräg zur Horizontalen angeordnet, um ein Abrutschen des abgesetzten Schlammes auf den Beckenboden zu ermöglichen. Beispielhaft kann diesbezüglich auf die DE 20 30 618 A1 verwiesen werden. Alternative Vorrichtungen sind in den Patenten US4028256, US2004031750, US3963624, US2022033277, US10870072, US2008314823 und US2014083921 beschrieben.

Zur Erleichterung der Fertigung und Montage derartiger Schrägklärer ist man bereits dazu übergegangen, die Lamellenplatten in Lamellenmodulen zusammenzufassen, die in der benötigten Anzahl in das Absatzbecken eingehangen werden. Die Lamellenmodule sind üblicherweise als Schweißkonstruktion vorgefertigt und weisen ein beträchtliches Gewicht auf, zudem gestaltet sich der Transport zum Einsatzort aufgrund der Bauteilgröße aufwendig. Die Lamellenmodule werden an Tragbalken aufgehangen, wodurch sich nach Einsetzen in das Absetzbecken tote Zonen ausbilden, die nicht mit Lamellenmodulen ausgefüllt sind, weshalb die Absetzbecken periodisch abgepumpt und gesäubert werden müssen. Dies alles erscheint verbesserungswürdig.

Aufgabe der Erfindung ist es, ein Lamellenmodul eines Schrägklärers der eingangs genannten Art vorzuschlagen, welches sich flexibel an unterschiedlichste Einbausituationen und insbesondere Größen von Absetzbecken anpassen lässt, sich rationell vorfertigen lässt und am Einsatzort mit geringem Aufwand verwendungsfertig montiert und in das Absetzbecken eingebracht werden kann.

Zur Lösung der gestellten Aufgabe wird erfindungsgemäß die Ausgestaltung eines Lamellenmoduls eines Schrägklärers gemäß den Merkmalen des Patentanspruchs 1 vorgeschlagen.

Vorteilhafte Ausgestaltungen und Weiterbildungen des erfindungsgemäßen Lamellenmoduls sind Gegenstand der abhängigen Ansprüche.

Ferner betrifft die Erfindung auch ein Absetzbecken mit mindestens einem in das Absetzbecken oberseitig einhängbaren erfindungsgemäßen Lamellenmodul.

Der erfindungsgemäße Vorschlag sieht vor, das Lamellenmodul in Form eines Stecksystems aus vorgefertigten Elementen auszubilden. Dieses Stecksystem umfasst Stirnplatten, zwischen denen mehrere Längsplatten verlaufen und eine Vielzahl von Lamellenplatten, die zwischen den Stirnplatten an den Längsplatten gehaltert sind, wobei die Verbindungen zwischen Stirnplatten und Längsplatten und/oder zwischen den Längsplatten und den Lamellenplatten als lösbare Steckverbindungen ausgebildet sind. Bevorzugt sind sämtliche Verbindungen zwischen Stirnplatten und Längsplatten sowie zwischen den Längsplatten und den Lamellenplatten als lösbare Steckverbindungen ausgebildet.

Erfindungsgemäß ergibt sich damit die Möglichkeit, die Elemente des Stecksystems zur Ausbildung des erfindungsgemäßen Lamellenmoduls, nämlich Stirnplatten, Längsplatten und Lamellenplatten im Rahmen einer Massenfertigung unter weitgehendem Rückgriff auf Gleichteile vorzugfertigen und platzsparend zum Aufstellungsort zu transportieren. Am Aufstellungsort angelangt können die Elemente aufgrund der lösbaren Steckverbindungen mit geringem Aufwand und vorzugsweise werkzeuglos zusammengesteckt werden, um das betriebsfertige Lamellenmodul zu bilden. Anpassungen an die Geometrie und die vorherrschenden Raumverhältnisse des Absatzbeckens können durch Variation der Anzahl sowie der Größe der eingesetzten Stirnplatten, Längsplatten und/oder Lamellenplatten einfach vorgenommen werden.

Nach einem Vorschlag der Erfindung weisen die Stirnplatten jeder Längsplatte zugeordnet eine Anordnung von Steckschlitzen auf, in die entsprechende stirnseitig vorstehende Haken der Längsplatten lösbar einsteckbar sind. Auf diese Weise lässt sich eine vorzugsweise rechtwinklige Verbindung zwischen den Stirnplatten und den Längsplatten einfach herstellen, indem die vorstehenden Haken der Längsplatten in die vorgesehenen Steckschlitze der Stirnplatten eingesteckt werden.

Nach einem weiteren Vorschlag der Erfindung weist jede Längsplatte ausgehend von einem im Einbauzustand entlang einer Oberseite verlaufenden Längsrand eine Vielzahl von schräg zur Horizontalen verlaufender Steckschlitze auf und jede Lamellenplatte weist ausgehend von einem im Einbauzustand entlang einer Unterseite verlaufenden Längsrand jeder Längsplatte zugeordnet einen Steckschlitz einer mit der Länge der Steckschlitze der Längsplatte entsprechenden Länge auf, dergestalt, dass die Längsplatten und die Lamellenplatten im Bereich der Steckschlitze einander rechtwinklig kreuzend lösbar ineinandersteckbar sind. Durch die schräg zur Horizontalen verlaufenden Steckschlitze in den Längsplatten wird dabei nicht nur der Abstand zwischen benachbarten Lamellenplatten festgelegt, sondern diese werden auch in der gewünschten Orientierung gehaltert, in der sie im Einbauzustand schräg zur Horizontalen, beispielsweise unter einem Winkel von 60° gehaltert sind.

Ein weiterer Vorschlag der Erfindung sieht vor, dass die Längsplatten benachbart zu der entgegengesetzt zur Oberseite verlaufenden Unterseite eine Vielzahl von Durchbrechungen aufweisen, die dem Zutritt des zu reinigenden Wassers dienen.

Im Einbauzustand unterhalb der Lamellenplatten können nach einem weiteren Vorschlag der Erfindung Traversen zwischen den Stirnplatten verlaufen, die im Bereich ihrer den Lamellenplatten zugewandten Oberseite jeweils Steckausnehmungen zum Einsetzen einer Lamellenplatte aufweisen und stirnseitig mittels vorstehender Spannhaken in entsprechenden Spannschlitzen der Stirnplatten lösbar einsteckbar sind. Die Traversen dienen als unterer Endanschlag für die in die Steckschlitze der Längsplatten eingesteckten Lamellenplatten und fixieren zugleich die die jeweiligen stirnseitigen Enden des Lamellenmoduls definierenden Stirnplatten in ihrer Lage zueinander.

Nach einem weiteren Vorschlag der Erfindung ist vorgesehen, dass im Einbauzustand eine Oberseite der Längsplatten in eine Klemmleiste im Bereich eines in der Klemmleiste ausgebildeten Einsteckschlitzes lösbar klemmend eingesteckt ist. Diese Klemmleiste sorgt dafür, dass das Lamellenmodul eine hohe Stabilität aufweist und richtet zugleich die in die Längsplatten eingesteckten Lamellenplatten exakt zueinander aus.

Nach einem weiteren Vorschlag der Erfindung ist das erfindungsgemäße Lamellenmodul im Einbauzustand oberseitig mit Haltestangen und an den Haltestangen gehalterten Laufrollen ausgebildet, mittels derer das Lamellenmodul an einem Tragbalken ein Absetzbecken einhängbar ist. Die Haltestangen können insbesondere an der Klemmleiste fixiert sein und an ihrem gegenüberliegenden Ende die Laufrollen haltern, sodass das gesamte Lamellenmodul entlang der Laufrollen in eine einen entsprechend schienenartig ausgebildeten Tragbalken eingeschoben und dann auf einfache Weise in das Absetzbecken eingegangen werden können. Ebenso einfach können die Lamellenmodule im Falle einer erforderlichen Reinigung in umgekehrter Richtung aus dem Absetzbecken herausbefördert und gereinigt werden.

Die Montage des erfindungsgemäßen Lamellenmoduls aus den mit Steckverbindungen ineinandersteckbaren Stirnplatten, Längsplatten und Lamellenplatten kann zudem dadurch erleichtert werden, dass die Stirnplatten mit einem oberseitigen Flansch und/oder die Längsplatten und/oder die Lamellenplatten mit oberseitigen Bohrungen für den Angriff eines Hebezeugs ausgebildet sind, um die Bauteile maschinell bewegen zu können.

Die Stirnplatten, Längsplatten und/oder Lamellenplatten können beispielsweise aus Metallblech, zum Beispiel Edelstahlblech vorgefertigt sein und in ihrer spezifischen Formgestaltung zum Beispiel gelasert werden, gleichermaßen ist jedoch auch eine Fertigung aus geeignetem Kunststoff, insbesondere faserverstärkten Hartkunststoffen möglich.

Nach einem weiteren Vorschlag der Erfindung sind die Lamellenplatten ausgehend von einer Stirnplatte zur anderen Stirnplatte mit stufenweise vergrößerter Breite ausgebildet, dergestalt, dass das Lamellenmodul in der vertikalen Projektion betrachtet konisch ausgebildet ist. Eine Vielzahl derartiger konisch ausgebildeter Lamellenmodule ergeben bei Aneinanderfügung entlang der Längsplatten eine ringförmige Anordnung, sodass mit den erfindungsgemäßen Lamellenmodulen auch kreisförmige Absetzbecken ausgefüllt werden können, ohne dass unerwünschte Toträume in Kauf genommen werden müssten.

Schließlich umfasst die Erfindung auch ein Absetzbecken mit mindestens einem in das Absetzbecken oberseitig einhängbaren Lamellenmodul, wie es vorangehend beschrieben worden ist.

Weitere Ausgestaltungen und Einzelheiten der Erfindung werden nachfolgend anhand von Ausführungsbeispielen in der Zeichnung erläutert. Es zeigen:
- Figur 1: in perspektivischer Darstellung eine Aufsicht auf ein rechteckiges mit erfindungsgemäßen Lamellenmodulen ausgebildetes Absetzbecken;
- Figur 2: das Absetzbecken gemäß Figur 1 in einer geschnittenen Seitenansicht;
- Figur 3a: ein Lamellenmodul gemäß der Erfindung in der Seitenansicht;
- Figur 3b: die vergrößerte Einzelheit gemäß Figur 3a;
- Figur 3C: das Lamellenmodul gemäß Figur 3a in einer um 90° gedrehten stirnseitigen Ansicht;
- Figur 4: die Ansicht einer Stirnplatte des erfindungsgemäßen Lamellenmoduls;
- Figur 5: die Ansicht einer Längsplatte des erfindungsgemäßen Lamellenmoduls;
- Figur 6: die Ansicht einer Lamellenplatte des erfindungsgemäßen Lamellenmoduls;
- Figur 7: die Seitenansicht einer Traverse des erfindungsgemäßen Lamellenmoduls;
- Figur 8: die Ansicht einer Klemmleiste des erfindungsgemäßen Lamellenmoduls;
- Figur 9: Aufsicht auf ein rundes mit erfindungsgemäßen Lamellenmodulen ausgebildetes Absetzbecken;
- Figur 10: die Aufsicht auf ein Lamellenmodul gemäß Figur 9.

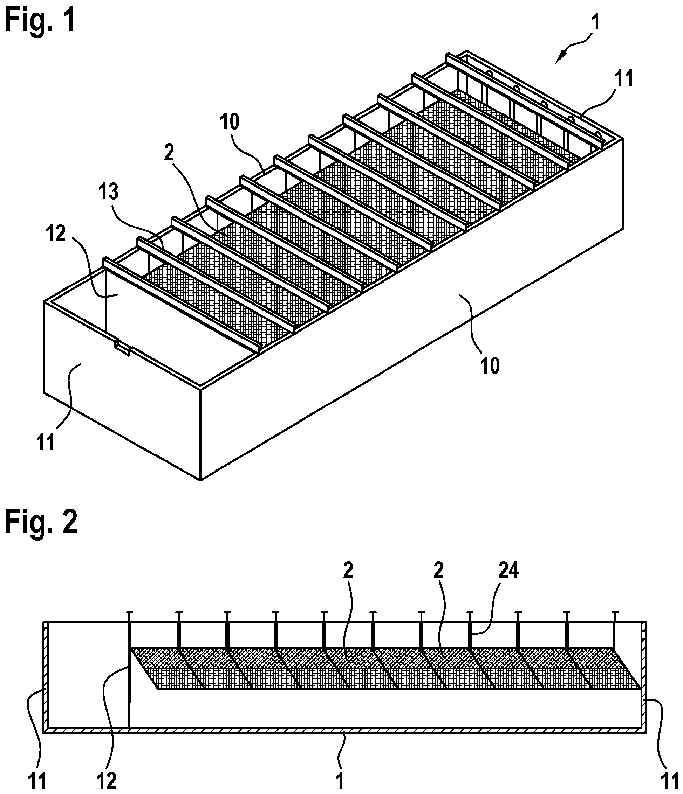

Aus den Figuren 1 und 2 ist ein rechteckiges Absetzbecken 1, gebildet aus Längswänden 10 und Querwänden 11 ersichtlich, welches mit einer Trennwand 12 in zwei unterschiedlich große Räume unterteilt ist. In den größeren der beiden Räume sind an Tragbalken 13 hängend Lamellenmodule 2 eines Schrägklärers eingehängt, um ein Absetzen von Sedimenten aus der in das Absetzbecken 1 geleiteten Flüssigkeit, üblicherweise Regen- oder Abwasser zu bewirken. Die Lamellenmodule 2 sind so dimensioniert, dass sie das Absetzbecken 1 nahezu vollständig ohne seitliche Toträume zu den Längs- und Querwänden 10, 11 ausfüllen.

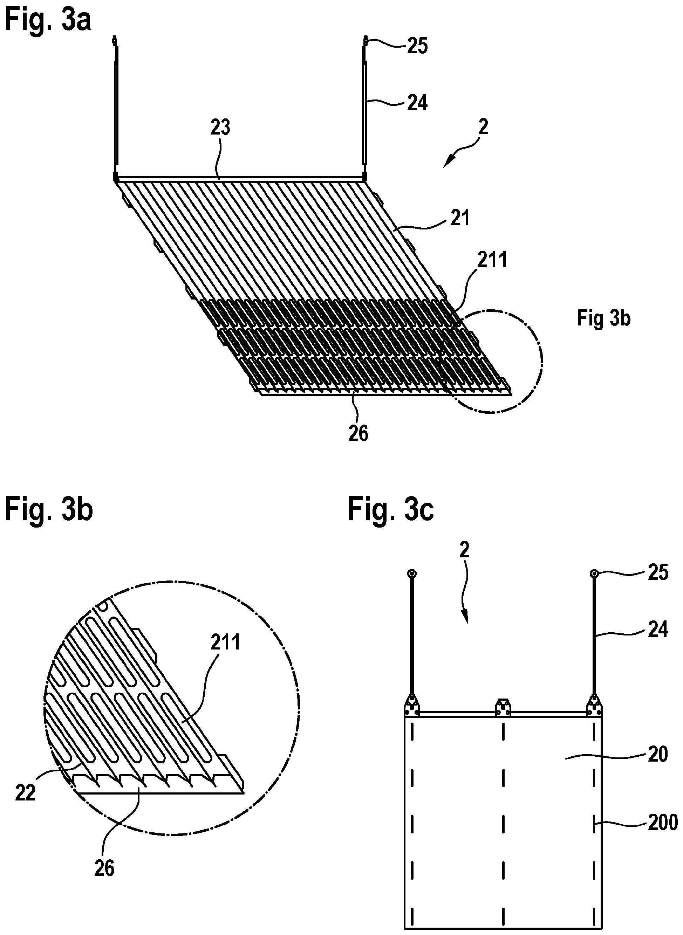

Gemäß den Darstellungen in den Figuren 3a bis 3c weist jedes einzelne Lamellenmodul 2 einen Aufbau aus lösbar ineinandergesteckten Komponenten auf. Stirnseitig sind als Abschluss Stirnplatten 20 gemäß Darstellung der Figur 3c vorgesehen, zwischen denen in rechtwinkliger Anordnung zu den Stirnplatten 20 sich im dargestellten Ausführungsbeispiel insgesamt drei Längsplatten 21 erstrecken, die in der Darstellung gemäß Figur 3a deckungsgleich hintereinander in der Zeichenebene liegen.

An den Längsplatten 21 sind zudem in nachfolgend noch näher beschriebener Weise eine Vielzahl von Lamellenplatten 22 schräg zur Horizontalen gehaltert, die den eigentlichen Absetzvorgang bewirken. Zur Lagefixierung verlaufen oberseitig entlang der Längsplatten 21 Klemmleisten 23 und unterseitig Traversen 26, in die die unterseitigen Enden der Lamellenplatten 22 in nachfolgend noch beschriebener Weise eingesteckt sind.

Man erkennt ferner, dass an den oberen Klemmleisten 23 jeweils Haltestangen 24 mit oberseitigen angeordneten Laufrollen 25 befestigt sind, mit denen die einzelnen Lamellenmodule 2 seitlich in die Tragbalken 13 eingeführt und von dort in das Absetzbecken 1 abgelassen werden können.

Wesentlich für den Aufbau der Lamellenmdule 2 ist es, dass deren Komponenten, nämlich Stirnplatten 20, Längsplatten 21 und Lamellenplatten 22 allesamt lösbar und vorzugsweise werkzeuglos als Stecksystem mit lösbaren Steckverbindungen aneinander befestigt werden.

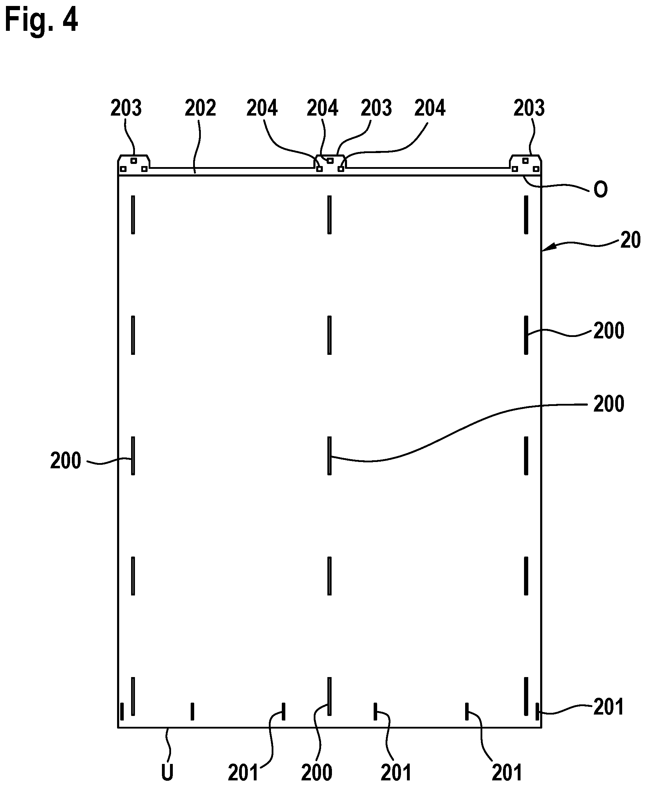

Zu diesem Zweck weisen die beiden stirnseitig als Abschluss und äußerste Platte vorgesehenen Stirnplatten 20 gemäß Darstellung in der Figur 4 eine rechteckförmige Gestaltung auf, wobei die Oberseite im Einbauzustand mit O und die Unterseite im Einbauzustand mit U gekennzeichnet ist, wie es auch bei den nachfolgenden Beschreibungen der Längsplatten 21 und Lamellenplatten 22 jeweils der Fall ist.

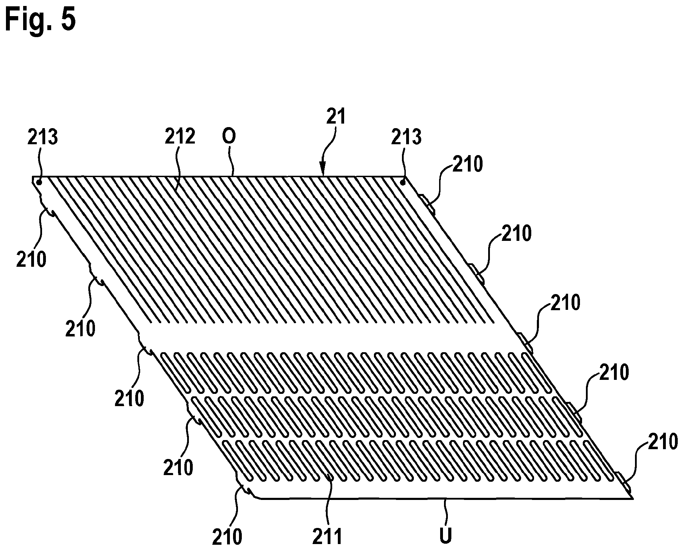

In den Stirnplatten 20 sind in hier in drei Reihen mehrere Steckschlitze 200 ausgebildet, wozu die Stirnplatte 20 beispielsweise aus einem Edelstahlblech gelasert wird. Man erkennt hier beispielhaft fünf in gleichem Abstand übereinander angeordnete Steckschlitze 200 in drei Reihen, nämlich einmal entlang des linken Randes, einmal entlang der Mittellinie und einmal entlang des rechten Randes. Diese Reihen von Steckschlitzen 200 dienen jeweils der Aufnahme einer Längsplatte 21, die in weiteren Einzelheiten aus der Figur 5 ersichtlich ist.

Dementsprechend sind die Längsplatten 21 an ihren beiden gegenüberliegenden Stirnseiten mit jeweils hier fünf vorstehenden stirnseitigen Haken 210 ausgebildet, die in eine Reihe der Steckschlitze 200 der Stirnplatten 20 eingeführt und dort lösbar verriegelt werden können, sodass eine rechtwinklige Ausrichtung der Längsplatten 21 zwischen den um die Breite der Längsplatten 21 voneinander beabstandeten Stirnplatten 20 bewirkt werden kann. Im dargestellten Ausführungsbeispiel verlaufen insoweit drei Längsplatten 21 zwischen den beiden Stirnplatten 20.

Die Längsplatten 21 weisen über ihre im wesentlichen halbe Höhe zwischen Oberseite O und Unterseite U ausgehend von der Oberseite O eine Vielzahl von Steckschlitzen 212 auf, die mit gleichem Abstand parallel zueinander unter einem Winkel zur Horizontalen verlaufen, hier beispielsweise 60°, wie es für die Anordnung der Lamellenplatten 22 wünschenswert ist.

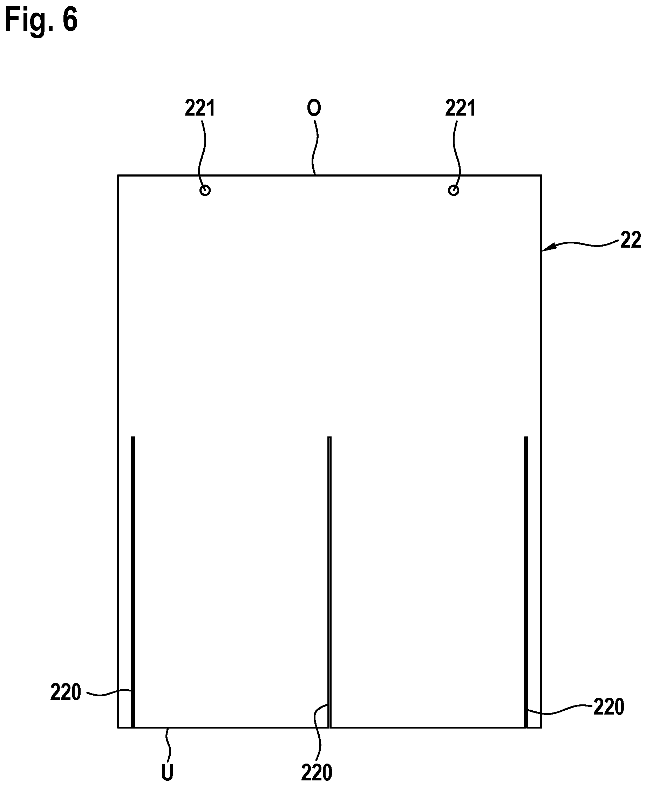

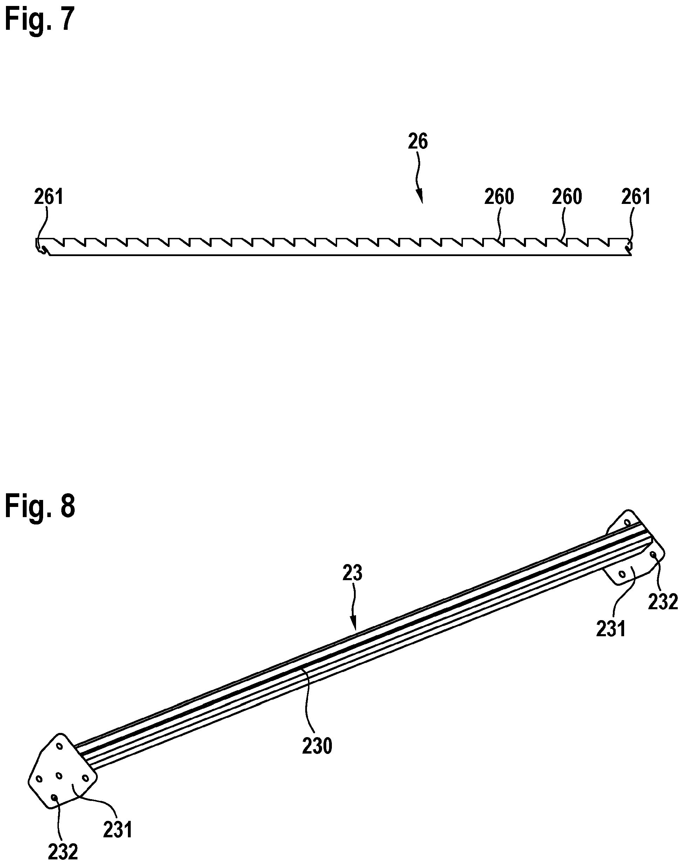

Hierzu korrespondierend sind die Lamellenplatten 22 gemäß der Darstellung in Figur 6 entsprechend mit von der Unterseite U her in gleicher Länge wie die Steckplätze 212 bis etwa zur Mitte verlaufenden Steckschlitzen 220 ausgerüstet, sodass es möglich ist, eine Vielzahl von Lamellenplatten 22 jeweils mit dem Steckschlitz 220 in einen der Steckschlitze 212 der Längsplatten 21 in einer einander kreuzenden Anordnung einzustecken. Damit lassen sich die Lamellenplatten 22 in der gewünschten Ausrichtung in großer Anzahl einfach befestigen. Unterseitig ruhen die Lamellenplatten 22 auf mehreren sich zwischen den Stirnplatten 20 erstreckenden Traversen 26, die aus der Figur 7 ersichtlich sind. Die Traversen 26 werden mit stirnseitig vorstehenden Spannhaken 261 in entsprechenden Spannschlitzen 201 der Stirnplatten 20 eingerastet und bewirken eine weitere Fixierung, zudem sind die Traversen 26 oberseitig mit Steckausnehmungen 260 versehen, in die jeweils der unterseitige Randbereich der in die Längsplatten 21 eingesteckten Lamellenplatten 22 eingreift.

Weiterhin sind die Stirnplatten 20 gemäß Darstellung in der Figur 4 entlang ihrer Oberseite O mit einem Flansch 202 versehen, der übereinstimmend mit der Anordnung der Reihen von Steckschlitzen 200 Befestigungsflächen 203 aufweist, in denen mehrere Befestigungsbohrungen 204 angeordnet sind. Auf die ausgehend von den Stirnplatten 20 rechtwinklig verlaufenden Längsplatten 21 mit den rechtwinklig dazu eingeführten Lamellenplatten 22 werden sodann die aus der Figur 8 ersichtlichen Klemmleisten 23 aufgesteckt, in dem der jeweils entlang der Oberseite O verlaufende Rand der Längsplatten 21 in einen unterseitigen Steckschlitz 230 der Klemmleiste 23 klemmend eingeführt wird. Auf diese Weise werden nicht nur sämtliche Lamellenplatten 22 oberseitig ausgerichtet, sondern die endseitig an der Klemmleiste 23 vorgesehenen Befestigungsflansche 231 mit Bohrungen 232 sind sodann auch deckungsgleich mit den Bohrungen 204 in den Befestigungsflächen 203 an den Steinplatten 20 und erlauben eine dauerhafte Fixierung zum Beispiel mittels Schrauben. Zudem können an diesen Flanschen 231 sodann die Haltestangen 24 mit Laufrollen 25 befestigt werden.

Die Montage des erfindungsgemäßen Lamellenmoduls 2 wird zudem dadurch erleichtert, dass die Stirnplatten mit dem oberseitigen Flansch 202 von einem geeigneten Hebezeug leicht ergriffen und transportiert werden kann. Auch sind die Längsplatten 21 gemäß Figur 5 mit an der Oberseite O ausgebildeten Bohrungen 213 und die Lamellenplatten 22 gemäß Figur 6 mit entsprechenden Bohrungen 221 für den Angriff eines derartigen Hebezeuges ausgebildet, um die Bauteile maschinell bewegen zu können.

Es ist somit möglich, ein Lamellenmodul 2 nahezu werkzeuglos unter Einsatz von lösbaren Steckverbindungen zwischen den Stirnplatten 20, den Lamellenplatten 22 und den diese verbindenden Längsplatten 21 auszubilden. Im Betrieb dieser Lamellenmodule 2 wird das zu reinigende Wasser über unterhalb der Steckschlitze 212 in den Längsplatten 21 ausgebildete Durchbrechungen 211 in die Zwischenräume zwischen benachbarten Lamellenplatten 22 eingeführt, sodass sich die Sedimente in an sich bekannter Weise absetzen können.

Durch eine Variation der Anzahl und Größe der einzelnen Stirnplatten 20, Längsplatten 21 und/oder Lamellenplatten 22 kann ein Lamellenmodul 2 soweit variiert werden, dass unterschiedlich große Absetzbecken 1 vollständig ohne Toträume ausgefüllt werden können.

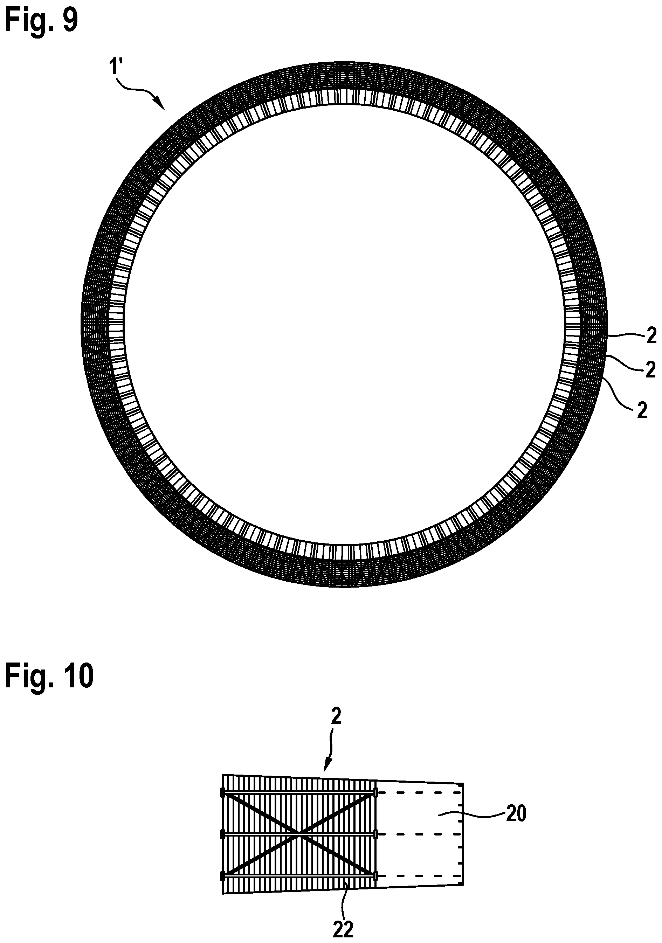

Im Ausführungsbeispiel gemäß der Figur 9 ist zudem ein rundes Absetzbecken 1' ersichtlich, welches mit Lamellenmodulen 2 gemäß der Darstellung in der Figur 10 ringförmig ausgefüllt ist. Im Unterschied zu dem Lamellenmodul 2 gemäß den Figuren 1 bis 8 zeichnet sich dieses Lamellenmodul 2 gemäß Figur 10 dadurch aus, dass ausgehend von der hier rechten Stirnplatte 20 bis zur linken Stirnplatte 20 die auf den Längsplatten 21 gehalterten Lamellenplatten 22 stufenweise vergrößerte Breiten aufweisen, sodass das Lamellenmodul 2 in der vertikalen Projektion betrachtet und in der zeichnerischen Darstellung gemäß Figur 10 von rechts nach links konisch erweiternd ausgebildet ist. Wenn solche konisch erweiternde Lamellenmodule 2 gemäß der Darstellung in Figur 9 im Bereich Ihrer Längsplatten 21 aneinandergefügt werden, ergibt sich eine kreisringförmige Anordnung, die zum Einsetzen in kreisförmige Absetzbecken 1' ohne Entstehung von Toträumen geeignet ist.

### Bezugszeichenliste:

- 1:: Absetzbecken
- 2:: Lamellenmodul
- 10:: Längswand
- 11:: Querwand
- 12:: Trennwand
- 13:: Tragbalken
- 20:: Stirnplatte
- 21:: Längsplatte
- 22:: Lamellenplatte
- 23:: Klemmleiste
- 24:: Haltestange
- 25:: Laufrolle
- 26:: Traverse
- 200:: Steckschlitz
- 201:: Spannschlitz
- 202:: Flansch
- 203:: Befestigungsfläche
- 204:: Befestigungsbohrung
- 210:: stirnseitiger Haken
- 211:: Durchbrechung
- 212:: Steckschlitz
- 213:: Montagebohrung
- 220:: Steckschlitz
- 221:: Montagebohrung
- 230:: Einsteckschlitz
- 231:: Befestigungsflansch
- 232:: Bohrung
- 260:: Steckausnehmung
- 261:: stirnseitiger Spannhaken

- O:: Oberkante
- U:: Unterkante

## Patentansprüche

1. Lamellenmodul (2) eines Schrägklärers mit einer Mehrzahl von parallel zueinander angeordneten und im Einbauzustand schräg zur Horizontalen gehalterten Lamellenplatten (22), **dadurch gekennzeichnet, dass** das Lamellenmodul (2) als Stecksystem mit Stirnplatten (20) ausgebildet ist, zwischen denen mehrere Längsplatten (21) verlaufen und die Lamellenplatten (22) zwischen den Stirnplatten (20) an den Längsplatten (21) gehaltert sind, wobei die Verbindungen zwischen Stirnplatten (20) und Längsplatten (21) und/oder zwischen den Längsplatten (21) und den Lamellenplatten (22) als lösbare Steckverbindungen ausgebildet sind.

2. Lamellenmodul (2) nach Anspruch 1, **dadurch gekennzeichnet, dass** die Stirnplatten (20) jeder Längsplatte (21) zugeordnet eine Anordnung von Steckschlitzen (200) aufweisen, in die entsprechende stirnseitig vorstehende Haken (210) der Längsplatten (21) lösbar einsteckbar sind.

3. Lamellenmodul (2) nach Anspruch 1 oder 2, **dadurch gekennzeichnet, dass** jede Längsplatte (21) ausgehend von einem im Einbauzustand entlang einer Oberseite (O) verlaufenden Längsrand eine Vielzahl von schräg zur Horizontalen verlaufender Steckschlitze (212) aufweist und jede Lamellenplatte (22) ausgehend von einem im Einbauzustand entlang einer Unterseite (U) verlaufenden Längsrand jeder Längsplatte (21) zugeordnet einen Steckschlitz (220) einer mit der Länge der Steckschlitze (212) der Längsplatte (21) entsprechenden Länge aufweist, dergestalt, dass die Längsplatten (21) und die Lamellenplatten (22) im Bereich der Steckschlitze (212, 220) einander rechtwinklig kreuzend lösbar ineinandersteckbar sind.

4. Lamellenmodul (2) nach Anspruch 3, **dadurch gekennzeichnet, dass** die Längsplatten (21) benachbart zu der entgegengesetzt zur Oberseite (O) verlaufenden Unterseite (U) eine Vielzahl von Durchbrechungen (211) aufweisen.

5. Lamellenmodul (2) nach einem der Ansprüche 1 bis 4, **dadurch gekennzeichnet, dass** im Einbauzustand unterhalb der Lamellenplatten (22) Traversen (26) zwischen den Stirnplatten (20) verlaufen, die im Bereich ihrer den Lamellenplatten (22) zugewandten Oberseite jeweils Steckausnehmungen (260) zum Einsetzen einer Lamellenplatte (22) aufweisen und stirnseitig mittels vorstehender Spannhaken (261) in entsprechenden Spannschlitzen (201) der Stirnplatten (20) lösbar einsteckbar sind.

6. Lamellenmodul (2) nach einem der Ansprüche 1 bis 5, **dadurch gekennzeichnet, dass** im Einbauzustand eine Oberseite (O) der Längsplatten (21) in eine Klemmleiste (23) im Bereich eines in der Klemmleiste (23) ausgebildeten Einsteckschlitzes lösbar klemmend eingesteckt ist.

7. Lamellenmodul (2) nach einem der Ansprüche 1 bis 6, **dadurch gekennzeichnet, dass** es im Einbauzustand oberseitig mit Haltestangen (24) und an den Haltestangen (24) gehalterten Laufrollen (25) ausgebildet ist, mittels derer das Lamellenmodul (2) an einem Tragbalken (13) in ein Absetzbecken (1, 1') einhängbar ist.

8. Lamellenmodul (2) nach einem der Ansprüche 1 bis 7, **dadurch gekennzeichnet, dass** die Stirnplatten (20) mit einem oberseitigen Flansch (202) und/oder die Längsplatten (21) und/oder die Lamellenplatten mit oberseitigen Bohrungen (221, 232) für ein Hebezeug ausgebildet sind.

9. Lamellenmodul (2) nach einem der Ansprüche 1 bis 8, **dadurch gekennzeichnet, dass** die Stirnplatten (20), Längsplatten (21) und/oder Lamellenplatten (22) aus Metallblech oder Kunststoff gebildet sind.

10. Lamellenmodul (2) nach einem der Ansprüche 1 bis 9, **dadurch gekennzeichnet, dass** die Lamellenplatten (22) ausgehend von einer Stirnplatte (20) zur anderen Stirnplatte (20) mit stufenweise vergrößerter Breite ausgebildet sind, dergestalt, dass das Lamellenmodul (2) in der vertikalen Projektion betrachtet konisch ausgebildet ist.

11. Absetzbecken (1, 1') mit mindestens einem in das Absetzbecken (1, 1') oberseitig einhängbaren Lamellenmodul (2) gemäß einem der vorangehenden Ansprüche.

## Claims

1. A lamella module (2) of an inclined clarifier, comprising a plurality of lamella plates (22) positioned parallel to one another and secured at an angle to the horizontal in the installed state, **characterized in that** the lamella module (2) is configured as a plug-in system with end plates (20), between which a plurality of longitudinal plates (21) extend, and the lamella plates (22) are secured on the longitudinal plates (21) between the end plates (20), wherein the connections between the end plates (20) and longitudinal plates (21) and/or between the longitudinal plates (21) and the lamella plates (22) are in the form of detachable plug-in connections.

2. The lamella module (2) as claimed in claim 1, **characterized in that** the end plates (20) of each longitudinal plate (21) have an associated arrangement of insertion slots (200) into which corresponding hooks (210) projecting from the end faces of the longitudinal plates (21) can be detachably inserted.

3. The lamella module (2) as claimed in claim 1 or 2, **characterized in that** each longitudinal plate (21), starting from a longitudinal edge extending along an upper side (O) in the installed state, has a plurality of insertion slots (212) extending obliquely to the horizontal, and each lamella plate (22), starting from a longitudinal edge of each longitudinal plate (21) extending along a lower side (U) in the installed state, has an associated insertion slot (220) with a length corresponding to the length of the insertion slots (212) of the longitudinal plate (21), so that the longitudinal plates (21) and the lamella plates (22) can be plugged into one another detachably in the region of the insertion slots (212, 220), crossing one another at right angles.

4. The lamella module (2) as claimed in claim 3, **characterized in that** the longitudinal plates (21) have a plurality of openings (211) adjacent to the lower side (U) extending on the opposite side from the upper side (O).

5. The lamella module (2) as claimed in any one of claims 1 to 4, **characterized in that**, in the installed state, crossbars (26) extend between the end plates (20) below the lamella plates (22), which crossbars, in the region of their upper side facing the lamella plates (22), each have insertion recesses (260) for the insertion of a lamella plate (22) and can be detachably inserted into corresponding clamping slots (201) of the end plates (20) at the end face by means of protruding clamping hooks (261).

6. The lamella module (2) as claimed in any one of claims 1 to 5, **characterized in that**, in the installed state, an upper side (O) of the longitudinal plates (21) is inserted in a detachably clamping manner into a clamping strip (23) in the region of an insertion slot formed in the clamping strip (23).

7. The lamella module (2) as claimed in any one of claims 1 to 6, **characterized in that**, in the installed state, it is formed with retaining rods (24) on the upper side and with rollers (25) secured to the retaining rods (24), by means of which the lamella module (2) can be suspended from a support beam (13) into a settling tank (1, 1').

8. The lamella module (2) as claimed in any one of claims 1 to 7, **characterized in that** the end plates (20) are provided with an upper flange (202) and/or the longitudinal plates (21) and/or the lamella plates are provided with upper holes (221, 232) for a lifting device.

9. The lamella module (2) as claimed in any one of claims 1 to 8, **characterized in that** the end plates (20), longitudinal plates (21), and/or lamella plates (22) are made of sheet metal or plastic.

10. The lamella module (2) as claimed in any one of claims 1 to 9, **characterized in that** the lamella plates (22) are formed with a width that increases gradually from one end plate (20) to the other end plate (20), so that the lamella module (2) has a conical shape when viewed in vertical projection.

11. A settling tank (1, 1') with at least one lamella module (2) which can be suspended from the top into the settling tank (1, 1') as claimed in any one of the preceding claims.

## Revendications

1. Module à lamelles (2) d'un clarificateur incliné, avec une pluralité de plaques à lamelles (22) disposées parallèlement les unes aux autres et maintenues à l'état monté en position inclinée par rapport à l'horizontale, **caractérisé en ce que** le module à lamelles (2) est conçu en tant que système d'emboîtement avec des plaques frontales (20) entre lesquelles plusieurs plaques longitudinales (21) s'étendent et les plaques à lamelles (22) sont fixées aux plaques longitudinales (21) entre les plaques frontales (20), dans lequel les connexions entre les plaques frontales (20) et des plaques longitudinales (21) et/ou entre les plaques longitudinales (21) et les plaques à lamelles (22) sont conçues en tant que connexions enfichables amovibles.

2. Module à lamelles (2) selon la revendication 1, **caractérisé en ce que** les plaques frontales (20) de chaque plaque longitudinale (21) présentent de manière associée un agencement de fentes d'emboîtement (200) dans lesquelles des crochets (210) correspondants faisant saillie à l'extrémité des plaques longitudinales (21) peuvent être emboîtés de manière amovible.

3. Module à lamelles (2) selon la revendication 1 ou 2, **caractérisé en ce que** chaque plaque longitudinale (21) présente, à partir d'un bord longitudinal s'étendant à l'état monté le long d'un côté supérieur (O), une pluralité de fentes d'emboîtement (212) s'étendant obliquement par rapport à l'horizontale et chaque plaque à lamelles (22) présente, en correspondance avec un bord longitudinal de chaque plaque longitudinale (21) s'étendant à l'état monté le long d'un côté inférieur (U) une fente d'emboîtement (220) d'une longueur correspondant à celle des fentes d'emboîtement (212) de la plaque longitudinale (21), de sorte que les plaques longitudinales (21) et les plaques à lamelles (22) peuvent s'emboîter de manière amovible en se croisant à angle droit au niveau des fentes d'emboîtement (212, 220).

4. Module à lamelles (2) selon la revendication 3, **caractérisé en ce que** les plaques longitudinales (21) présentent à proximité du côté inférieur (U) s'étendant à l'opposé du côté supérieur (O) une pluralité de perforations (211).

5. Module à lamelles (2) selon l'une quelconque des revendications 1 à 4, **caractérisé en ce que** des traverses (26) s'étendent à l'état monté sous les plaques à lamelles (22) entre les plaques frontales (20), qui présentent au niveau de leur côté supérieur tourné vers les plaques à lamelles (22) des évidements d'emboîtement (260) pour l'insertion d'une plaque à lamelles (22) et peuvent être emboîtées de manière amovible au niveau de leur face frontale au moyen de crochets de serrage saillants (261) dans des fentes de serrage correspondantes (201) des plaques frontales (20).

6. Module à lamelles (2) selon l'une quelconque des revendications 1 à 5, **caractérisé en ce qu'**à l'état monté, un côté supérieur (O) des plaques longitudinales (21) est inséré de manière amovible et serrée dans une barre de serrage (23) au niveau d'une fente d'insertion formée dans la barre de serrage (23).

7. Module à lamelles (2) selon l'une quelconque des revendications 1 à 6, **caractérisé en ce qu'**à l'état monté, il est conçu sur son côté supérieur avec des tiges de retenue (24) et des galets de roulement (25) fixés aux tiges de retenue (24), au moyen desquels le module à lamelles (2) peut être accroché à une poutre porteuse (13) dans un bassin de décantation (1, 1').

8. Module à lamelles (2) selon l'une quelconque des revendications 1 à 7, **caractérisé en ce que** les plaques frontales (20) sont conçues avec une bride supérieure (202) et/ou les plaques longitudinales (21) et/ou les plaques à lamelles sont conçues avec des perçages supérieurs (221, 232) pour un appareil de levage.

9. Module à lamelles (2) selon l'une quelconque des revendications 1 à 8, **caractérisé en ce que** les plaques frontales (20), les plaques longitudinales (21) et/ou les plaques à lamelles (22) sont constituées de tôle métallique ou de matière plastique.

10. Module à lamelles (2) selon l'une quelconque des revendications 1 à 9, **caractérisé en ce que** les plaques à lamelles (22) sont conçues avec une largeur augmentant progressivement d'une plaque frontales (20) à une autre plaque frontales (20), de sorte que le module à lamelles (2) est conçu en forme conique lorsqu'il est observé en projection verticale.

11. Bassin de décantation (1, 1') avec au moins un module à lamelles (2) pouvant être accroché par le haut dans le bassin de décantation (1, 1') selon l'une quelconque des revendications précédentes.
